# EUROPÄISCHE PATENTSCHRIFT

(11) **EP 0 331 949 B1**
(45) Veröffentlichungstag und Bekanntmachung des Hinweises auf die Patenterteilung: **20.09.1995**
(21) Anmeldenummer: 89102832.6
(22) Anmeldetag: 18.02.1989
(51) Int. Cl.: H04M 1/65

(54) **Batteriegespeister Codesender zur Fernbedienung bzw. Fernabfrage eines Anrufbeantworters**
Battery-fed code emitter for remote control or remote interrogation of an answering device
Emetteur de code alimenté par pile pour la commande ou l'interrogation à distance d'un répondeur automatique

(30) Priorität: 10.03.1988 DE 3807850
(43) Veröffentlichungstag der Anmeldung: 13.09.1989
(73) Patentinhaber: Grundig E.M.V. Elektro-Mechanische Versuchsanstalt Max Grundig GmbH & Co. KG, 90762 Fürth (DE)
(72) Erfinder: Mittelstädt, Rainer c/o Grundig E.M.V., Kurgarterstrasse 37 D-8510 Fürth/Bay (DE)

(56) Entgegenhaltungen:
- EP-A- 0 251 296
- DE-A- 3 312 800
- GB-A- 2 107 555
- US-A- 4 126 768
- US-A- 4 763 355
- PATENT ABSTRACTS OF JAPAN, Band 9, Nr. 204 (E-337)[1927], 21. August 1985; & JP-A-60 069 946 (SHARP K.K.) 20-04-1985
- PATENT ABSTRACTS OF JAPAN, Band 10, Nr. 201 (E-419)[2257], 15. Juli 1986; & JP-A-61 43 050 (NIPPON TELEGR. & TELEPH. CORP.) 01-03-1986

## Beschreibung

Die Erfindung betrifft einen batteriegespeisten Codesender der im Oberbegriff des Anspruches 1 angegebenen Art zur Fernbedienung bzw. Fernabfrage eines Anrufbeantworters.

Zur Fernabfrage eines Anrufbeantworters über einen Codesender ist es erforderlich, sowohl dem Anrufbeantworter als auch dem Codesender einen benutzereigenen Code zuzuordnen. Dieser Code, der, entsprechend umgesetzt, als Tonsignalfolge mittels eines elektroakustischen Wandlers in einen Fernsprechapparat eingebbar und über die Fernsprechleitung übertragbar ist, bildet den Schlüssel, um überhaupt eine Fernbedienung bzw. Fernabfrage eines Anrufbeantworters durchführen zu können. Was die Einstellung des betreffenden Codes am Codesender und dessen Aussendung anbelangt, so sind verschiedene Möglichkeiten bekannt. Der deutschen Offenlegungschrift DE-A-33 12 800 ist in diesem Zusammenhang entnehmbar, den Codesender durch Aufstecken von Brückenkontakten zu codieren. Eine entsprechende Codiermöglichkeit wäre auch über geeignete Codierschalter denkbar. Derartige Lösungen zur Einstellung des benutzereigenen Codes, wie diese beispielweise aus der GB-A-2 107 555 bekannt sind, sind jedoch entweder umständlich zu handhaben und zum Teil ohne Eingriff in den Codesender nicht realisierbar oder sind technisch sehr aufwendig und dementsprechend kostenintensiv.

Eine weitere bekannte Möglichkeit zur Einstellung des benutzereigenen Codes besteht noch darin, den Code über eine Tastatur einzugeben. Gleichzeitig erfolgt die Umsetzung und Aussendung des Codes als Tonsignalfolge. Der Nachteil dieser Lösung ist, daß der Code bei jeder Fernabfrage neu eingegeben werden muß, was ebenfalls für einen Benutzer umständlich zu handhaben ist. Außerdem können dem Benutzer durch die immer wieder neu auszuführende Eingabe des Codes leicht Fehler unterlaufen, wodurch die Fernabfrage des Anrufbeantworters zu einer sehr langwierigen Prozedur werden kann. Schließlich ist aus der EP-A- 0 251 296 ein speziell ausgestaltetes tragbares Datenfunkterminal bekannt, bei dem Telefonnummern als Nachrichten als solche oder in einer Textnachricht zwischengespeichert werden.

Der Erfindung liegt die Aufgabe zugrunde, einen batteriegespeisten Codesender der im Oberbegriff des Anspruches 1 angegebenen Art so auszubilden, daß er bei geringem technischen Aufwand eine komfortable Möglichkeit bietet, einen hochverschlüsselten benutzereigenen Code fur Fernabfrage eines Anrufbeantworters zu generieren und auszusenden. Ferner soll hierbei ein besonders stromsparender Betrieb gewährleistet sein.

Diese Aufgabe wird gemäß der Erfindung durch die im Kennzeichen des Patentanspruches 1 angebenen Merkmale gelöst. Vorteilhafte Weiterbildung der Erfindung ist in dem abhängigen Anspruch gekennzeichnet.

Bei dem batteriegespeisten Codesender gemäß der Erfindung werden in vorteilhafter Weise aufwendige und teure Codierschalter eingespart. Dennoch ist eine sehr einfache Einknopfbedienung zum Aussenden eines hochverschlüsselten benutzereigenen Codes möglich. Der Code ist nach einmaliger Eingabe jederzeit und so oft wie nötig durch einfachen Tastendruck automatisch abrufbar und nach Umsetzung in eine entsprechende Tonsignalfolge in bekannter Weise über einen elektroakustischen Wandler absendbar.

Hierzu ist bei dem batteriegespeisten Codesender gemäß der Erfindung als Einrichtung zur Einstellung und Aussendung des benutzereigenen Codes eine für Telefonschaltungen an sich bekannte Wahlwiederholungsschaltung vorgesehen. Die betreffende Schaltung verfügt über eine Tastatur zur Eingabe des benutzereigenen Codes, einen elektronischen Speicher zur Ablage des Codes, eine Wahltaste zum Abruf des gespeicherten Codes und einen Generator zur Umsetzung des über die Wähltaste abgerufenen Codes in eine Tonsignalfolge sowie zur Aussendung dieser Folge.

Bei einer bevorzugten Ausführungsform des Codesenders gemäß der Erfindung ist als Speicher für den benutzereigenen Code ein nichtflüchtiger Speicher vorgesehen. Hierdurch ist die Speicherung des benutzereigenen Codes nicht zeitbegrenzt.

Die für Telefonschaltungen konzipierten Wahlwiederholungsschaltungen benötigen jedoch einen Ruhestrom, der die üblicherweise in einem batteriegespeisten Codesender verwendete Batterie zu stark belasten würde.

Der Codesender gemäß der Erfindung ist daher mit einer Schaltlogik ausgestattet, die z.B. aus einer Diodenmatrix und einem Schaltverstärker besteht, und die den Batteriestrom für den Codesender erst bei Betätigung einer beliebigen Funktionstaste anschaltet. Ferner ist eine Zeitsteuerung vorgesehen, die den Batteriestrom für den Codesender automatisch wieder abschaltet, sobald die gewünschte Funktion ausgeführt ist.

Abgesehen von der sehr stromsparenden Betriebsweise ergibt sich hierdurch zusätzlich der Vorteil, daß ein gesonderter Ein-/Ausschalter nicht mehr erforderlich ist. Neben dem somit geringeren technischen Aufwand ist gleichzeitig eine wesentliche Erleichterung, was die Bedienung des Codesenders anbelangt, zu sehen. Kosten durch Fehlbedienung für den Fall, daß z.B. das Ausschalten des Codesenders vergessen wird (Entleerung der Batterie), können ebenfalls nicht mehr entstehen.

## Patentansprüche

1. Batteriegespeister Codesender zur Fernbedienung bzw. Fernabfrage eines Anrufbeantworters mit einer Einrichtung zur Einstellung und Aussendung eines benutzereigenen Codes, der, entsprechend umgesetzt, als Tonsignalfolge mittels eines elektroakustischen Wandlers in einem Fernsprechapparat eingebbar und über die Fernsprechleitung übertragbar ist, bei dem als Einrichtung zur Einstellung und Aussendung des benutzereigenen Codes eine für Telefonschaltungen an sich bekannte Wahlwiederholungsschaltung vorgesehen ist, die über eine Wähltaste zum Abruf des gespeicherten Codes und einen Generator zur Umsetzung des über die Wähltaste abgerufenen Codes in eine Tonsignalfolge sowie zur Aussendung der Tonsignalfolge verfügt, dadurch gekennzeichnet, daß die Wahlwiederholungsschaltung ferner über eine Tastatur zur Eingabe des benutzereigenen Codes und einen elektronischen Speicher zur Ablage des Codes verfügt, und daß eine Schaltlogik vorgesehen ist, die den Batteriestrom für den Codesender bei Betätigung einer beliebigen Funktionstaste anschaltet, und bei dem ferner eine Zeitsteuerung vorgesehen ist, die den Batteriestrom für den Codesender automatisch abschaltet, sobald die gewünschte Funktion ausgeführt ist.

2. Codesender nach Anspruch 1, **dadurch gekennzeichnet**, daß als Speicher für den benutzereigenen Code ein nichtflüchtiger Speicher vorgesehen ist.

## Claims

1. Battery-powered code transmitter for the remote operation or remote interrogation of an answering machine, having a device for setting and transmitting a user-specific code which, when suitably converted, can be fed into a telephone set as an audio-signal sequence by means of an electroacoustical converter and can be transmitted via the telephone line, in which code transmitter a redialling circuit known per se for telephone circuits is provided as device for setting and transmitting the user-specific code, which redialling circuit has a selection key for retrieving the stored code and a generator for converting the code retrieved by means of the selection key into an audio-signal sequence and for transmitting the audio-signal sequence, characterized in that the redialling circuit furthermore has a keyboard for feeding in the user-specific code and an electronic memory for storing the code and in that a switching logic is provided which switches on the battery current for the code transmitter when any function key is actuated and in which a time controller is furthermore provided which automatically switches off the battery current for the code transmitter as soon as the desired function has been performed.

2. Code transmitter according to Claim 1, characterized in that a nonvolatile memory is provided as memory for the user-specific code.

## Revendications

1. Emetteur de code alimenté par pile pour la télécommande ou l'interrogation à distance d'un répondeur téléphonique, comportant un dispositif pour régler et émettre un code propre à l'utilisateur qui, converti de façon correspondante, peut être introduit sous la forme d'une suite de signaux acoustiques, au moyen d'un transducteur électro-acoustique, dans un appareil téléphonique et peut être transmis par l'intermédiaire de la ligne téléphonique, et dans lequel il est prévu comme dispositif pour régler et émettre le code propre à l'utilisateur, un circuit de répétition de sélection connu en soi pour des circuits téléphoniques et qui comporte une touche de séléction pour appeler le code mémorisé et un générateur pour convertir le code appelé par l'intermédiaire de la touche de sélection, en une suite de signaux acoustiques ainsi que pour émettre la suite de signaux acoustiques, caractérisé en ce que le circuit de répétition de sélection comporte en outre un clavier pour entrer le code propre à l'utilisateur et une mémoire électronique pour mémoriser le code, et qu'il est prévu une logique de commutation, qui applique le courant de la pile pour l'emetteur de code lors de l'actionnement d'un touche fonctionnelle quelconque, et qu'il est prévu une unité de commande temporelle qui interrompt automatiquement le courant pour l'émetteur de code dès que la fonction désirée est exécutée.

2. Emetteur de code selon la revendication 1, caracterisé en ce qu'une mémoire non volatile est prévue en tant que mémoire pour le code propre à l'utilisateur.
